# EUROPEAN PATENT APPLICATION

(11) **EP 1 637 994 A1**
(43) Date of publication of application: **22.03.2006**
(21) Application number: 05107922.6
(22) Date of filing: 30.08.2005
(51) Int. Cl.: G06F 9/44

(54) **ACTIVE CONTENT WIZARD EXECUTION WITH IMPROVED CONSPICUITY**

(30) Priority: 17.09.2004 US 944688
(71) Applicant: MICROSOFT CORPORATION, Redmond, WA 98052 (US)
(72) Inventor: McGlinchey, Andrew J., 98052, Redmond (US); Bala, Aravind, 98052, Redmond (US); Jacoby, James D., 98052, Redmond (US); Finnigan, James P., 98052, Redmond (US); Sen, Saikat, 98052, Redmond (US)
(74) Representative: Grünecker, Kinkeldey, Stockmair & Schwanhäusser Anwaltssozietät

(57) **Abstract**

Active Content Wizards (ACWs) related to helping computer users perform tasks are executed using an ACW interpreter. In one aspect of the present invention, the interpreter provides multiple levels of user interaction for a given ACW script. In order to help focus the user's attention, various methods are used to increase the conspicuity of the user interface elements relative to sub-tasks during execution of the ACW script. In one embodiment, areas around the user interface element are also de-emphasized.

## Description

### RELATED APPLICATION

This application is a Continuation-In-part Application of United States Patent Application Number 10/337, 745, filed January 7, 2003 entitled ACTIVE CONTENT WIZARD: EXECUTION OF TASKS AND STRUCTURED CONTENT.

### BACKGROUND OF THE INVENTION

There have been several attempts to enable natural language/speech based interaction with computers. The results of these attempts have so far been limited. This is due to a combination of technology imperfections, lack of non-intrusive microphone infrastructure, high authoring costs, entrenched customer behaviors and a competitor in the form of the GUI (Graphical user interface), which offers high value for many tasks. The present invention focuses on two of these limitations, closer integration with the GUI and reduced authoring. The Graphical User Interface (GUI) is a widely used interface mechanism. GUI's are very good for positioning tasks (e.g. resizing a rectangle), visual modifier tasks (e.g. making something an indescribable shade of blue) or selection tasks (e.g. this is the one of a hundred pictures I want rotated). GUI is also good for speedy access to quick single step features. An applications GUI is a useful toolbox that is organized from a functional perspective (e.g. organized into menus, toolbars, etc) rather than a task oriented perspective (e.g. organized by higher level tasks that users want to do: e.g. "make my computer secure against hackers").

However, GUIs present many problems to the user as well. Using the toolbox analogy, a user has difficulty finding the tools in the box or figuring out how to use the tools to complete a task. An interface described by single words, tiny buttons and tabs forced into an opaque hierarchy doesn't lend itself to the way people think about their tasks. The GUI requires the user to decompose the tasks in order to determine what elements are necessary to accomplish the task. This requirement leads to complexity. Aside from the complexity issue, it takes time to assemble GUI elements (i.e. menu clicks, dialog clicks, etc). This can be inefficient and time consuming even for expert users.

One existing mechanism for addressing GUI problems is a written help procedure. Help procedures often take the form of Help documents, PSS (Product support services) KB (Knowledge base) articles, and newsgroup posts, which fill the gap between customer needs and GUI problems. They are analogous the manual that comes with the toolbox, and have many benefits. These benefits include, by way of example:
1) They are easy to author even for non-technical authors.
2) They are easy to update on a server so connected users have easy access to new content, and
3) They teach the GUI putting users in control of solving problems.

However, Help documents, PSS KB articles and newsgroups have their own set of problems. These problems include, by way of example:
1) Complex tasks require a great deal of processing on the user's part. The user needs to do the mapping from what is said in each step to the GUI.
2) Troubleshooters, and even procedural help document, often include state information that creates complex branches within the help topic, making topics long and hard to read and process for the user. Toolbars may be missing, and may need to be turned on before the next step can be taken. Troubleshooters often ask questions about a state that is at best frustrating (because the troubleshooter should be able to find the answer itself) and at worst unanswerable by non-experts.
3) There are millions of documents, and searching for answers involves both a problem of where to start the search, and then how to pick the best search result from the thousands returned.
4) There is no shared authoring structure. Newsgroup posts, KB articles, troubleshooters and procedural Help documents all have different structures and authoring strategies, Yet they are all solving similar problems.

Another existing mechanism for addressing GUI problems is a Wizard. Wizards were created to address the weaknesses of GUI and written help procedures. There are now thousands of wizards, and these wizards can be found in almost every software product that is manufactured. This is because wizards solve a real need currently not addressed by existing text based help and assistance. They allow users to access functionality in a task-oriented way and can assemble the GUI or tools automatically. Wizards allow a program manager and developer a means for addressing customer tasks. They are like the expert in the box stepping the user through the necessary steps for task success. Some wizards help customers setup a system (e.g. Setup Wizards), some wizards include content with features and help customers create content (e.g. Newsletter Wizards or PowerPoint's AutoContent Wizard), and some wizards help customers diagnose and solve problems (e.g. Troubleshooters).

Wizards provide many benefits to the user. Some of the benefits of wizards are that:
1) Wizards embody the notion of a "task" It is usually clear to the user what the wizard is helping them accomplish. With step-by-step pages, it is easy for a user to make choices and in the case of well designed wizards the incidence of visual overwhelm of the user is often reduced.
2) Wizards automatically assemble and interact with the underlying features of the software and include the information or expertise needed for customers to make choices. This saves the user time in executing the task.
3) Wizards automatically generate content and can save users time by creating text and planning layout.
4) Wizards are also a good means for asking questions, getting responses and branching to the most relevant next question or feature.

However, wizards too, have their own set problems. Some of the problems with wizards include, by way of example:
1) There are many more tasks people try to accomplish than there are wizards for accomplishing them.
2) Wizards and IUI (Inductive User Interfaces) do not teach customers how to use underlying GUI and often when the Wizard is completed, users are unsure of where to go next.
3) The cost of authoring of wizards is still high and requires personnel with technical expertise (e.g. software developers) to author the Wizard.

### SUMMARY OF THE INVENTION

Active Content Wizards (ACWs) related to helping computer users perform tasks are executed using an ACW interpreter. In one aspect of the present invention, the interpreter provides multiple levels of user interaction for a given ACW script. In order to help focus the user's attention, various methods are used to increase the conspicuity of the user interface elements relative to sub-tasks during execution of the ACW script. In one embodiment, areas around the user interface element are also de-emphasized.

### BRIEF DESCRIPTION OF THE DRAWINGS

FIG. 1 is a block diagram of one exemplary environment in which the present invention can be used.
FIG. 2 is a block diagram of one embodiment of the present invention, illustrating a natural user interface using the ACW platform.
FIG. 3 shows a block diagram illustrating the ACW Interpreter according to one embodiment of the present invention.
FIG. 4 is a flow diagram illustrating the execution of a selected task according to one embodiment of the present invention.
FIGS. 5A-5J are a series of screen shots illustrating the execution of the ACW Interpreter on a particular ACW script.
FIGS. 6-8 are screen shots illustrating the execution of the ACW Interpreter on another script in accordance with an embodiment of the present invention.
FIG. 9 is a screen shot illustrating execution of an ACW script in accordance with an embodiment of the present invention.
FIGS. 10 and 11 are screen shots illustrating a further prompt in accordance with embodiments of the present invention.

### DETAILED DESCRIPTION OF ILLUSTRATIVE EMBODIMENTS

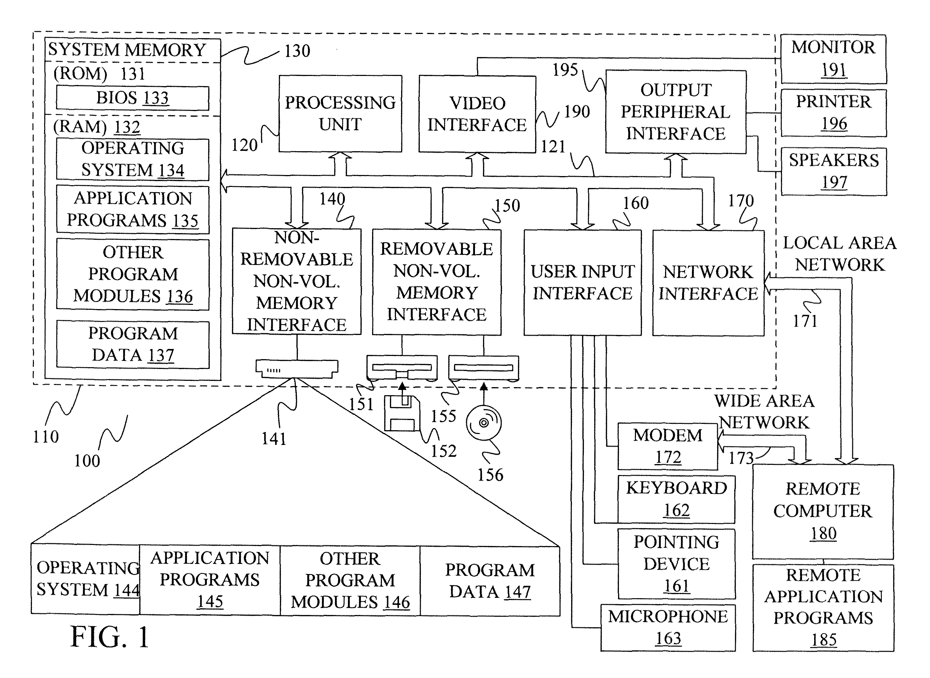

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

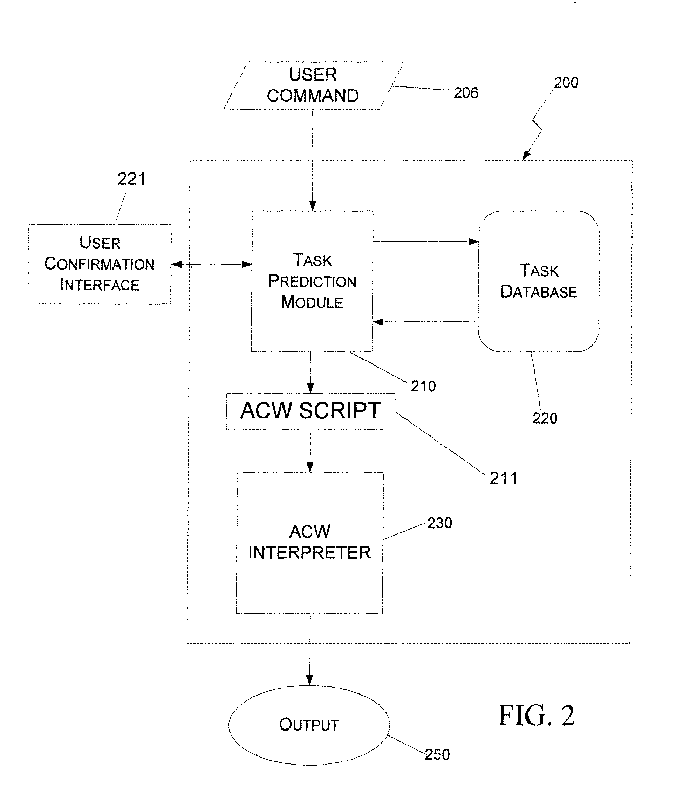

FIG. 2 is a block diagram of a natural user interface module or system 200 that uses one embodiment of the present invention. Natural user interface 200 comprises of three components. These components include a task prediction module 210, a task database 220 and active content wizard (ACW) Interpreter 230. Natural user interface 200 also receives an input user command or query 206 from a user, and provides an output 250. The query represents a task that the user desires to perform. Input command 206 is in one embodiment a natural language input. However, other inputs can be used for the input command 206 such as selecting a hyperlink, selecting a check box, selecting from a list of words, or providing speech input.

Task prediction module 210 is configured to determine a task associated with the inputted user command 206. In one embodiment, task prediction module 210 leverages an existing help search module to search task database 220 to find matches to the user command 206. Task prediction module 210 receives a user input command 206 and converts and/or processes command 206 into a format that allows for searching of task database 220. Module 210 then executes a search against task database 220 to obtain information associated with the task represented by command 206.

Following the search, task prediction module 210 receives the results of the search from task database 220 and provides one or more task documents from database 220 that likely match the user query 206, to the user through an appropriate interface 221. In one embodiment, module 210 simply selects one of the task documents as a selected task. In another embodiment, the user can select, through interface 221, one of those documents as a selected document. Task prediction module 210 then returns an active content wizard (ACW) script corresponding to the selected task to the ACW Interpreter 230. It should be noted that task prediction module 210 has been described as a conventional information retrieval component. However, other methods can be used to determine the desired task represented by user command 206. By way of example, any other well-known information retrieval technique, such as pattern or word matching, context free grammars (CFGs) for speech support, or other classifier such as support vector machines and Naive Bayesian Networks.

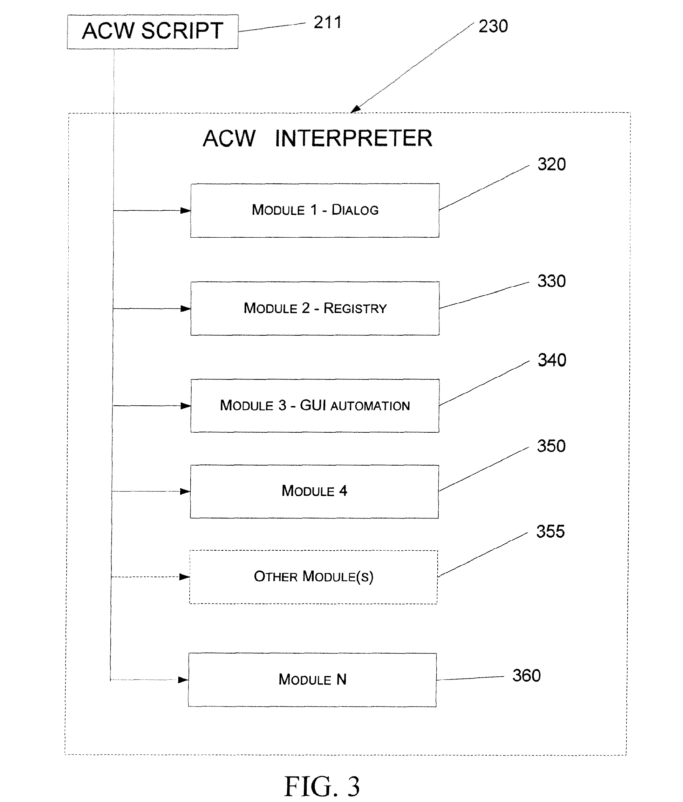

FIG. 3 is a block diagram illustrating the ACW Interpreter 230 illustrated in FIG. 2. The ACW Interpreter 230 includes a Dialog module 320, Registry module 330 and GUI Automation module 340. Each module is capable of executing a specific type of step detailed in an ACW script 211 provided to the ACW Interpreter 230. However, ACW Interpreter 230 can be modified to contain additional modules or different modules as well, and can be periodically updated with new or different modules. By way of example one embodiment GUI Automation module 340 is implemented using Microsoft Windows UI Automation.

ACW interpreter 230 is a computer program configured to execute the atomic steps for the task selected by the user. In one embodiment ACW interpreter 230 contains a GUI Automation module implemented using Microsoft User Interface Automation also by Microsoft Corporation. This module simulates user inputs, such as keyboard key depressions, mouse clicks, mouse wheel rotations, etc. However, the GUI automation module of ACW interpreter 230 can be implemented using any application that is able to programmatically navigate a graphical user interface and to perform and execute commands on the user interface. Thus, ACW interpreter 230, in some embodiments, may actually use a programmatic interface, such as a user interface automation module, to send messages directly to the user interface control(s).

ACW interpreter 230 thus executes each of the atomic steps associated with a selected task in order. For instance, when the task requires the user to click a button on the GUI to display a new menu or window, ACW interpreter 230 uses the GUI automation module to locate the button on the display device 191 (such as a monitor), clicks the button, and then waits for the new window to show up on the display device. The type/name of the window expected is detailed in the ACW script file 211.

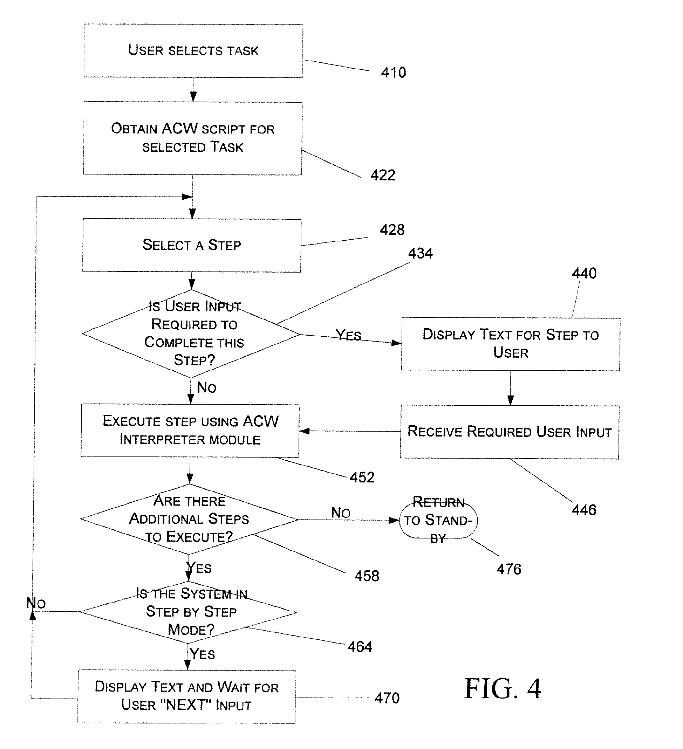

FIG. 4 is a flow diagram illustrating the execution of an ACW script selected in system 200 according to one embodiment of the present invention. At 410, in response to a user command 206, task prediction module 210 identifies and presents to the user a set of possible tasks, and the user selects a task from the set. The task could be selected by any mechanism such as searching for a task, using speech commanding, or choosing from a list of tasks. Module 210 then obtains the ACW script 422 corresponding to the chosen task.

At 428, system 200 selects the first step in the number of atomic steps to be executed by the ACW Interpreter 230. At 434, the system 200 determines whether a user input is required to complete this particular atomic step. If user input is required to complete the step, system 200 displays, at 440, the particular step to the user. The display can be a window on display device 191 requesting an input, or it can be the GUI associated with the particular atomic step. For example, following displaying of the text for that particular step system 200 waits, and does not advance to the next atomic step until it receives the required user input at 446. The system can also display any additional information that is useful to the user in making a decision, such as related information.

Following receipt of the required input, or if no such input is required, system 200 proceeds to execute the current atomic step at 452. At step 458, system 200 looks ahead to see whether there is another atomic step to be executed for the selected task. If there are additional atomic steps to execute, system 200 checks, at 464, to see if the user has selected a step-by-step mode. If so, system 200 executes each individual atomic step only after it receives an input from the user indicating that the user is ready to advance to the next atomic step in the list of atomic steps. This input is received at 470. If system 200 is not in step-by-step mode, the system returns to step 428 and executes the next step in the list of atomic steps as discussed above. If at step 458 there are no additional atomic steps to execute, system 200 had finished executing the desired task at step 476.

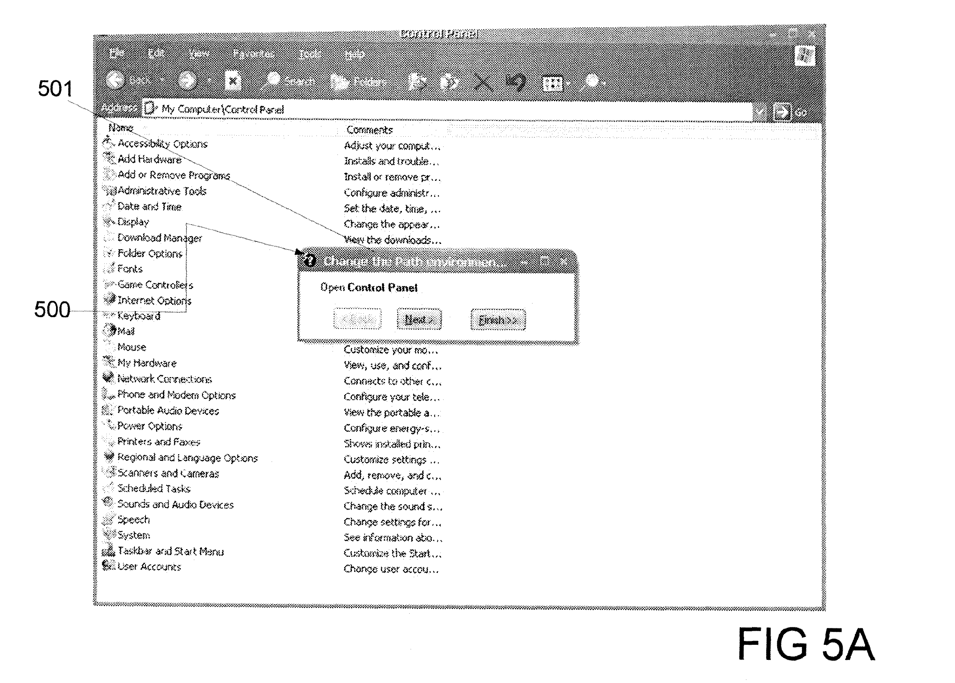

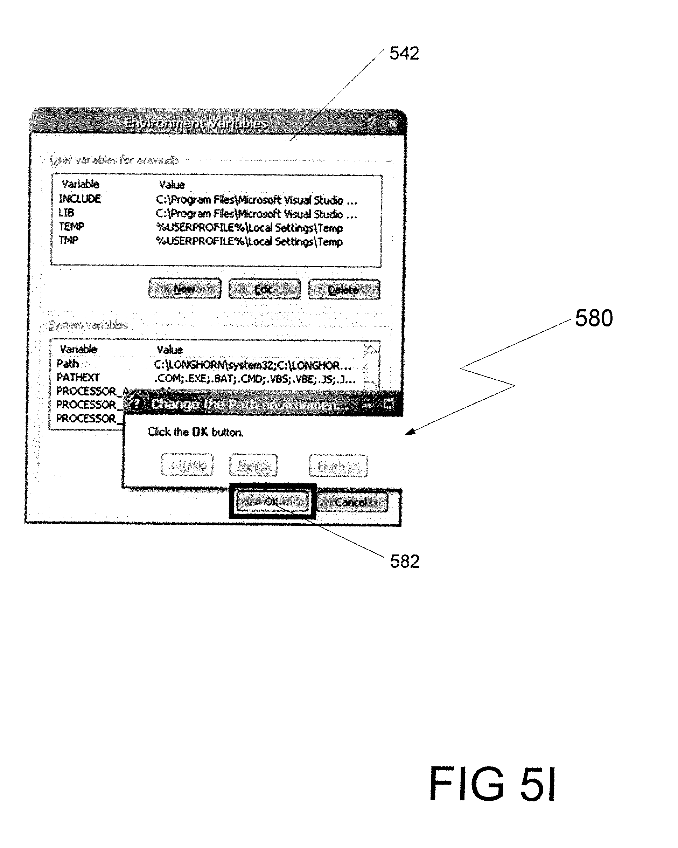

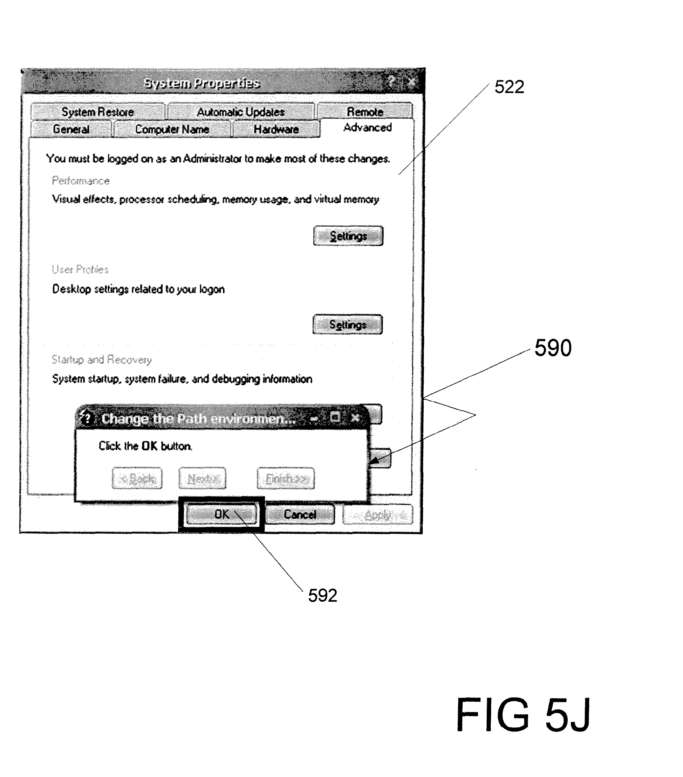

FIGS. 5A - 5J illustrate representative screen shots of the steps represented in an ACW script 211 and executed by system 200 in performing a task corresponding to a user command 206 "Edit the path variable".

The set of screen shots in FIGS. 5A-5J show the ACW Interpreter 230 executing the series of atomic steps required to complete the task "Edit the path variable". The interpreter 230 executes each step and only pauses when user input is required.

FIG. 5A shows the first step of the illustrative sequence in window 500. The example provided below is merely one example of an ACW script. Any form of ACW script can be executed in accordance with embodiments of the present invention, which will be set forth in greater detail later in the specification. The action shown is to "open the control panel". The part of the ACW script that corresponds to this step is detailed below: 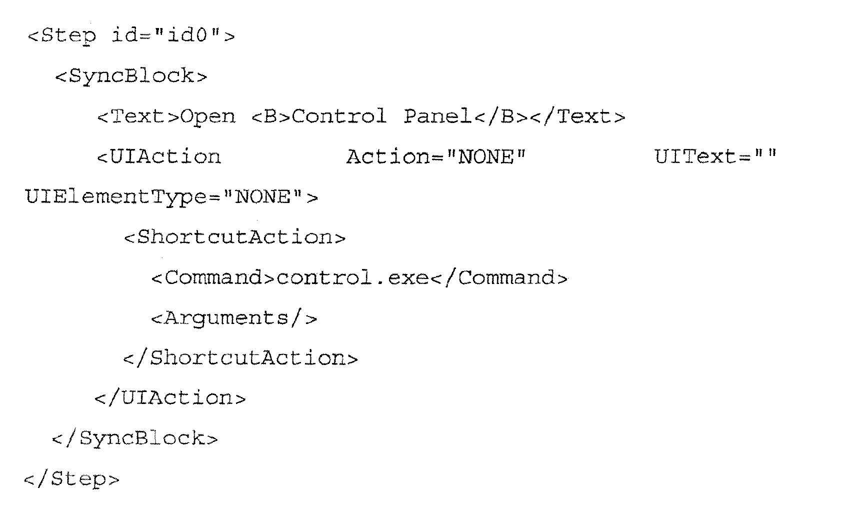 The text 501 to display in window 500 is "Open Control Panel". The ACW Interpreter 230 executes this step by executing a shortcut called control.exe, and displays the control panel window under window 500 as shown in FIG. 5A.

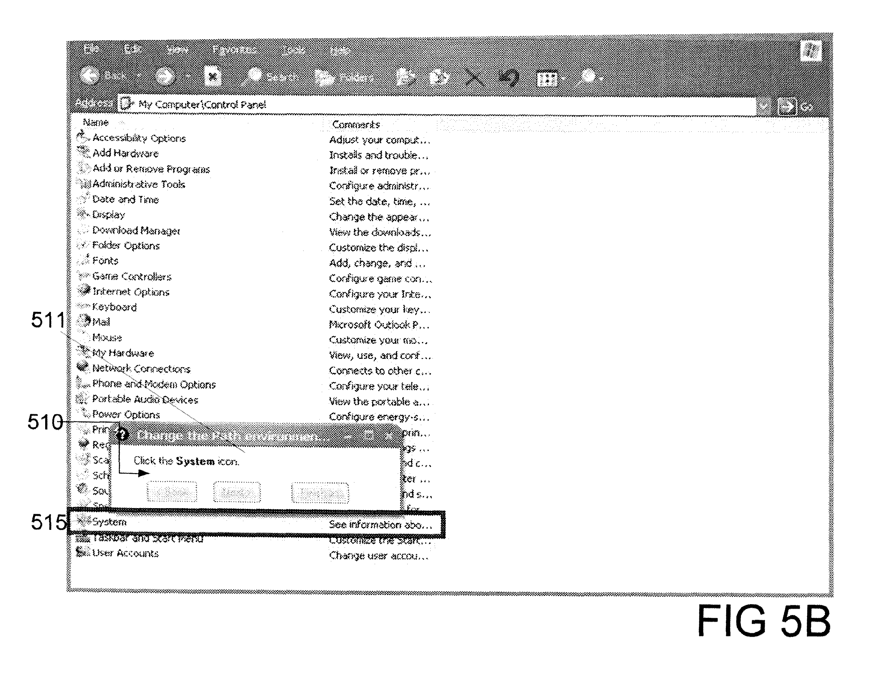

FIG. 5B illustrates the second step in the sequence of atomic steps. The action illustrated in window 510 is to "Click the system icon" on the control panel. The part of the ACW script that corresponds to this step is detailed below. 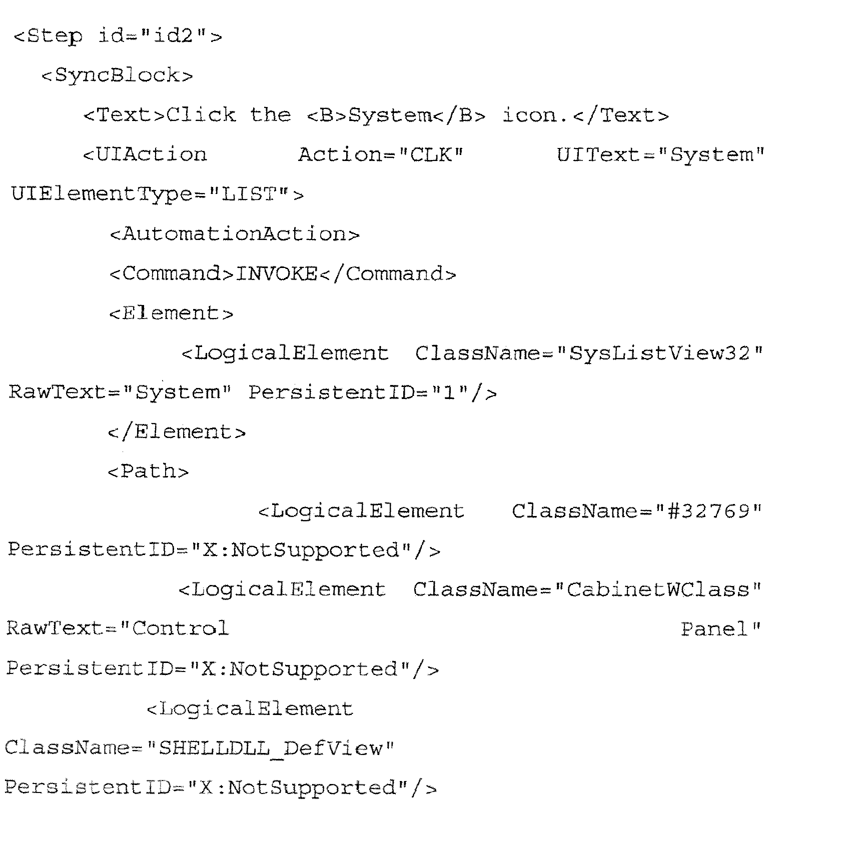 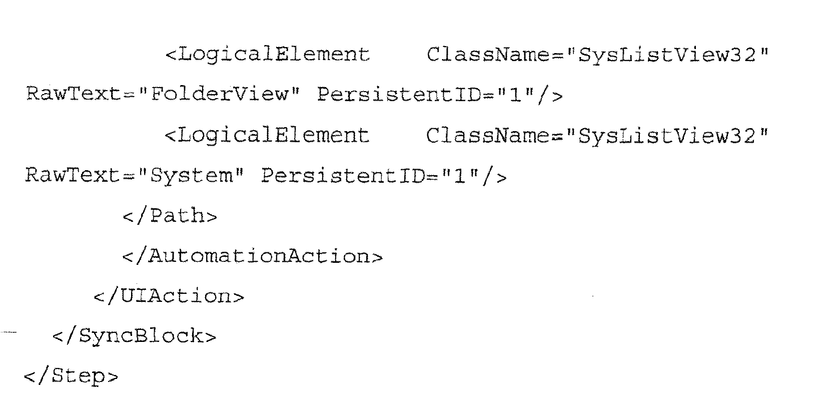 The text 511 to display in window 510 is "Click the **System** icon". The ACW Interpreter 230 finds the **System** icon 515 on the control panel window using the Path information contained in the script file. The Path information is used by the ACW Interpreter to programmatically locate the icon on the screen using some GUI automation technology (E.g. Windows UI Automation). When ACW Interpreter 230 finds the icon, the interpreter calls the "invoke" method on the icon (using Windows UI Automation) to click it.

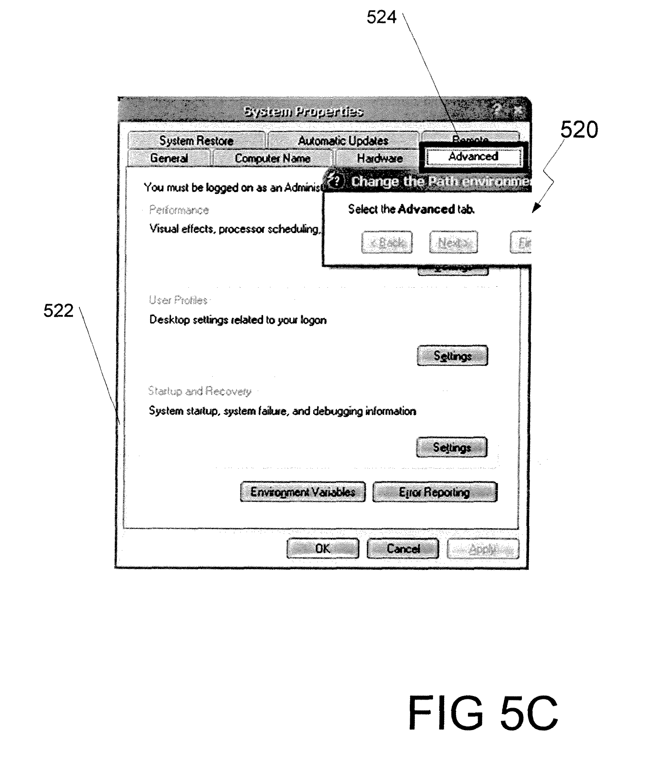

FIG. 5C-5F show the progression of the atomic steps of the task by the ACW Interpreter 230.

In FIG. 5C, system 200 has opened a window 522 containing the information in the system menu 515 highlighted in FIG. 5B. FIG. 5C illustrates the next atomic step in the sequence required for the task. Window 520 is presented on the graphical user interface and instructs the user to click on the Advanced tab in window 522. At the same time the ACW Interpreter 230 locates the **Advanced** tab 524 in window 522, and highlights it. System 200 then executes a click command (again by calling the "invoke" method) on the **Advanced** tab causing window 520 to display the options available to the user under the **Advanced** tab.

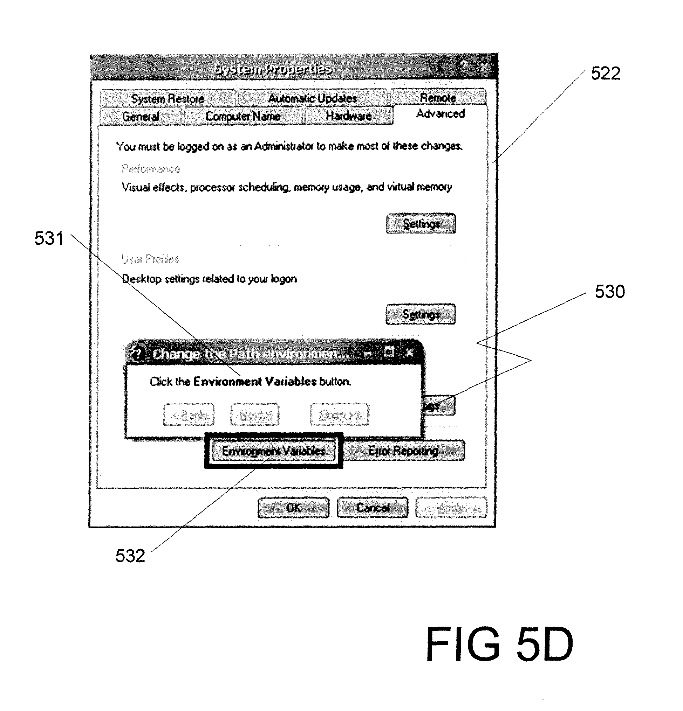

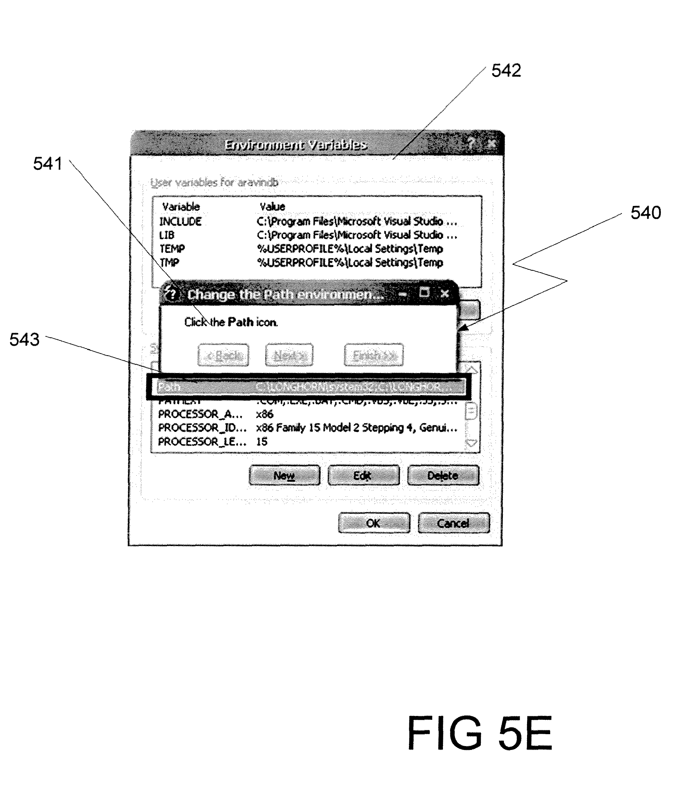

In FIG. 5D, system 200 opens window 530 on the graphical user interface and displays the instructions for this step to the user. Window 530 contains the instructions for the user to execute this step by displaying text 531 instructing the user to "Click on the **Environment Variables** button" 532. At the same time ACW interpreter 230 locates the **Environment Variables** button 532 on window 522 and highlights button 532 on the GUI. System 200 then executes a click command on the **Environment Variables** button 532 causing window 542 to open as illustrated in FIG. 5E.

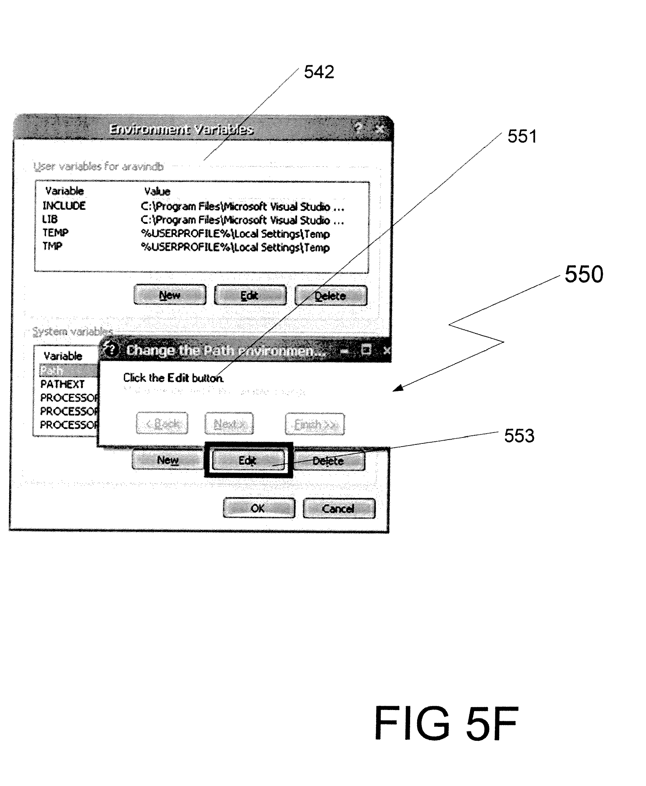

As there are additional steps required to complete the task, system 200 displays to the user the next set of instructions in window 540. Window 540 instructs the user to "Click on the **Path** icon" 541. At the same time the ACW interpreter 230 locates the **Path** icon 543 on window 542 and highlights it for the user. System 200 then executes a click command on path icon 543 causing window 550 to appear as illustrated in FIG. 5F.

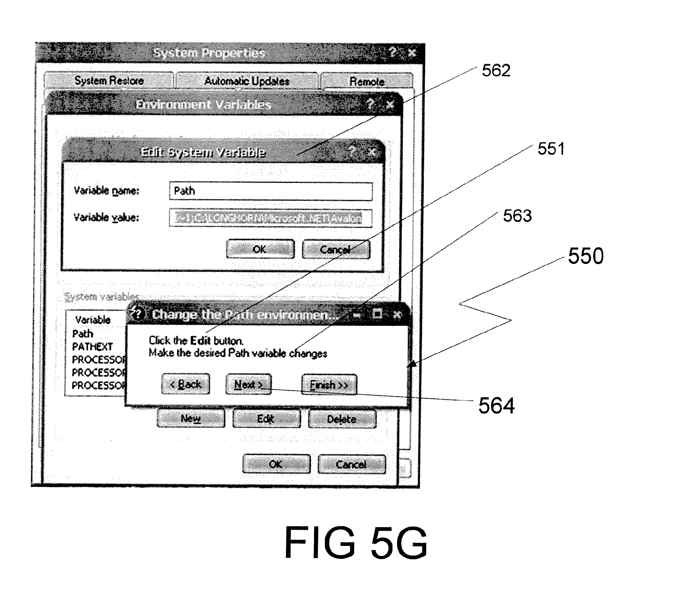

The user is again presented with instructions to complete this next step in the sequence of atomic steps. Window 550 instructs the user to click on the Edit button 553 through text 551. At the same time ACW Interpreter 230 locates the edit button 553 on window 542 and highlights the edit button 553 on the GUI. System 200 then executes a click command clicking edit button 553, which causes window 562 to open as illustrated in FIG. 5G.

FIG. 5G shows a step in the task that requires user input. In this step, the user is required to make changes to the path variable. This information is present in a box. When the user is finished, the user has to press the **Next** button 564 in window 550 for the ACW Interpreter to continue executing the necessary steps in the wizard. The corresponding part of the ACW script in one embodiment of the present invention is shown below. 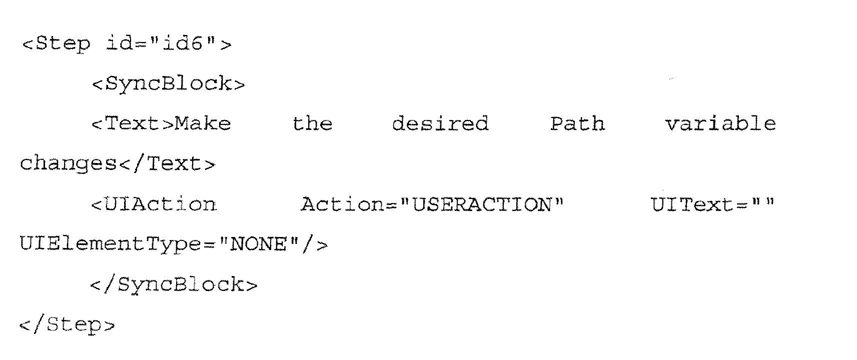 The action is listed as a USERACTION which lets the ACW Interpreter know that user input is expected in this step, and that it cannot proceed till the user finishes.

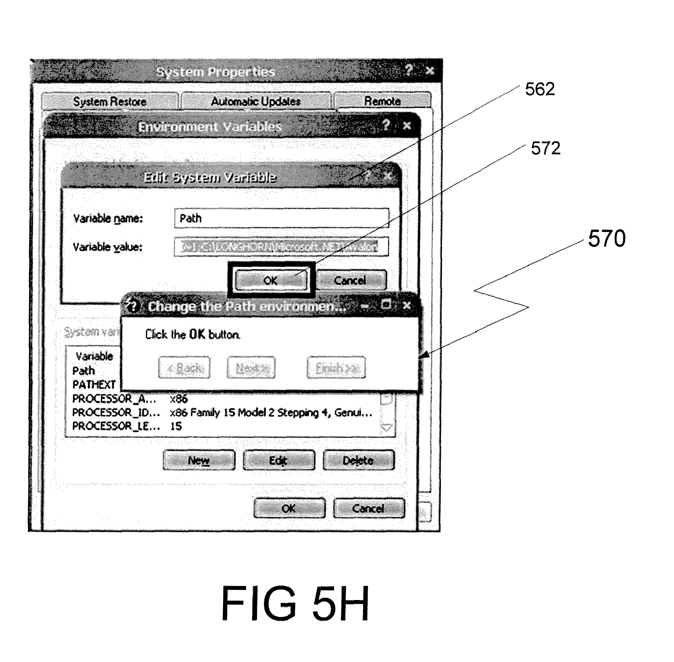

Window 550 changes to highlight a second instruction 563 to the user. This instruction instructs the user to make desired changes to the path. As this step requires user input system 200 does not advance until the user enters the desired information and clicks **Next.** Then system 200 causes window 570 to open instructing the user to click the "OK" button 572. At the same time the ACW Interpreter 230 locates and highlights button 572 on window 562, as illustrated in FIG. 5H.

FIGS. 5I and 5*J* illustrate the steps required to complete the desired task. Following the clicking of the "OK" button 572 in FIG. 5H, system 200 and ACW Interpreter 230 displays to the user instructions to click the "OK" buttons 582 and 592 in windows 580 and 590 respectively and highlights this button on the respective window 542 and 522. Once all the atomic steps are completed system 200 returns to a standby state to await another user command 206.

In accordance with one embodiment of the invention, ACW interpreter 230 can provide different levels of user interaction with the interface. For example, in steps where no user data is required, such as those described above with respect to FIGS. 5A - 5E, 5H and 5I, ACW interpreter 230 can either wait for the user to interact with the selected user interface element, or ACW interpreter 230 can interact directly with the user interface, via GUI automation module 340, on behalf of the user. When ACW interpreter 230 waits for the user to interact with the interface, it is operating in a "show-me" mode. Alternately, when ACW interpreter 230 simply interacts on behalf of the user, it is operating in "do it for me" mode. The level of interaction can be selected by the user, or automatically varied based upon the system's evaluation of user interaction with the user interface. Other levels of user interaction can also be used in accordance with embodiments of the present invention.

In accordance with another embodiment of the present invention, as each step of the ACW script is executed by ACW interpreter 230, the conspicuity of the corresponding user interface element is increased. The increase in conspicuity can be done in a number of ways. First, the element itself can be highlighted, or otherwise emphasized as set forth above. Additionally or alternatively, the conspicuity of the user interface element can be increased by de-emphasizing areas surrounding the element of interest. For example, a fog can be applied to all areas of the user interface except the element of interest and the ACW window, such as window 500 in FIG. 5A. The "fog" can be created by any suitable method. However, it is preferred that the fog be created by alpha-blending to draw a semi-transparent color over portions of the screen. Alternate methods of de-emphasizing the areas surrounding the element of interest include reducing the intensity of the display in such areas, changing the colors or tints in such areas, blurring such areas, and/or any combination thereof.

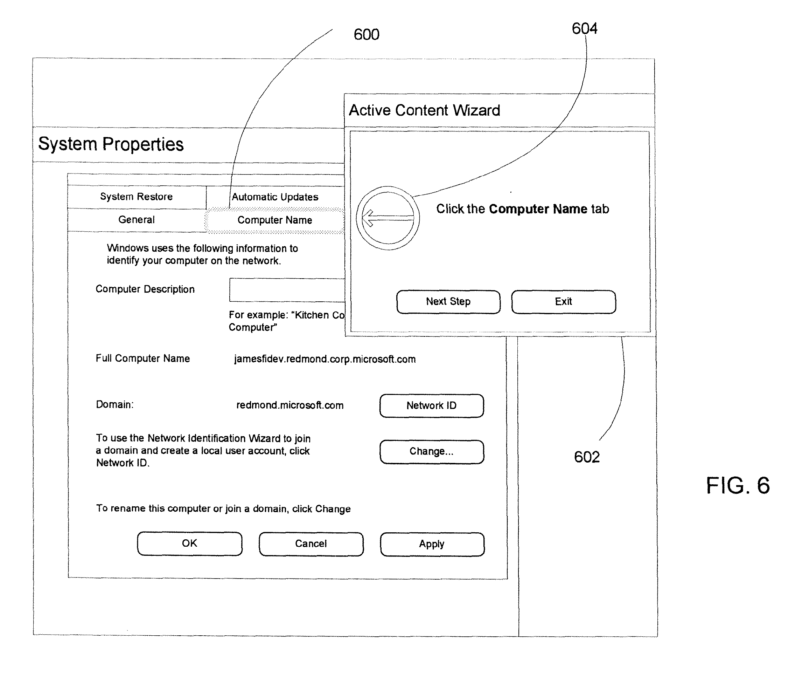

FIG. 6 is a screen shot of an ACW script being executed by ACW interpreter 230 in accordance with an embodiment of the present invention. For the step illustrated in FIG. 6, ACW interpreter 230 determines that the user interface element of interest is tab 600. Accordingly, ACW interpreter 230 invokes or moves ACW window 602 proximate element 600. Further, window 602 includes directional indicator 604 that points toward element 600. ACW interpreter will also preferably place a colored pulsing glow around element 600. Since ACW interpreter 230 is operating in "show me" mode, it will wait for the user to select element 600 before proceeding. ACW interpreter 230 can detect the user's selection by monitoring or otherwise interacting with automation module 340.

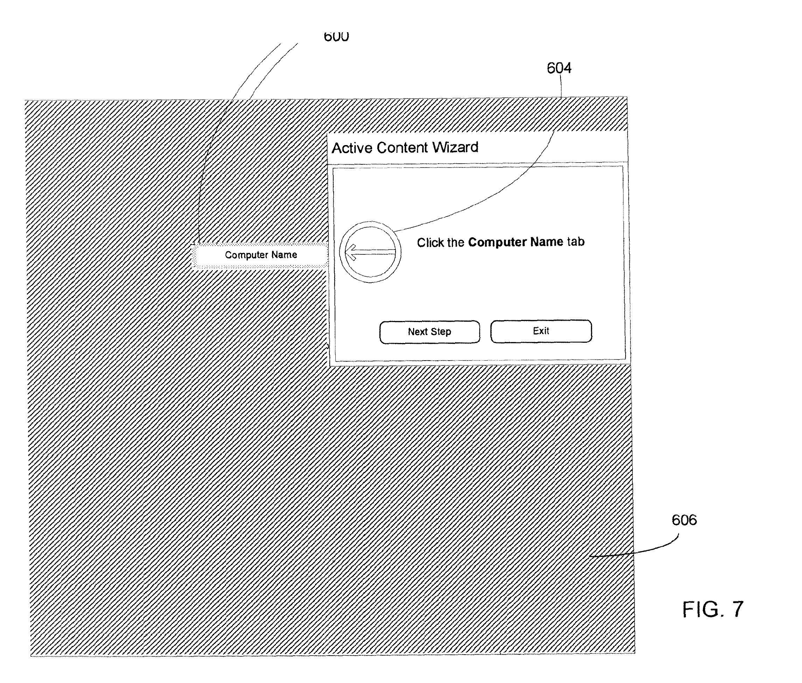

When a user's attention needs to be drawn to an element of the interface, it is preferable that the conspicuity of the element be increased by de-emphasizing its surroundings. Accordingly, when ACW interpreter 230 is operating in "show me" mode, the entire screen, with the exception of the ACW window and the user interface element with which the ACW script is interacting, may be de-emphasized. FIG. 7 illustrates fog 606 diagrammatically as cross-hatching covering substantially all of screen 608 except for element 600 and ACW window 602. Fig. 7 shows ACW interpreter 230 operating in "Show Me" mode. Fog 606 includes a hole 610 surrounding element 600. In one embodiment, fog 606 is formed by alpha-blending to draw a semi-transparent color over the screen.

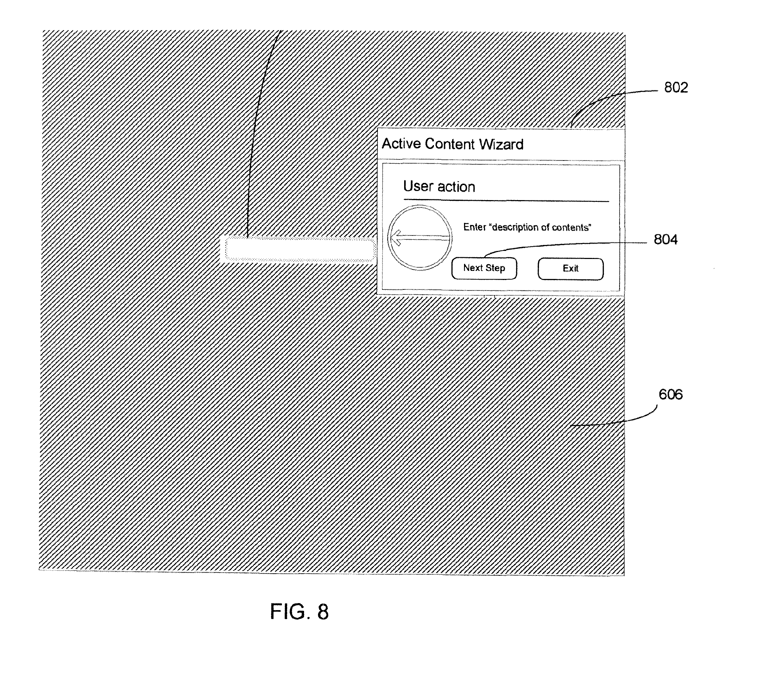

FIG. 8 illustrates another step in the ACW script. As ACW interpreter 230 moves to the next step in the ACW script, a user action is required where the user must enter some information. ACW interpreter 230 moves or invokes ACW window 802 proximate user interface element 800. In this case, the user needs to enter a description of the computer in user interface element 800. In order to help the user focus on only the directions in window 802 and user interface element 800, everything else is covered by fog 606. Window 802 includes a "Next Step" button 804. After the user has finished interacting with the user interface, the user will press button 804 to move on to the next step in the ACW script. In some embodiments, interpreter 230 can monitor the user's interaction via automation module 340 and thus is able to detect when the next step is appropriate. Thus, such embodiments do not require a next step button 804. Once the step is complete, fog 606 is removed prior to the next step in the ACW script.

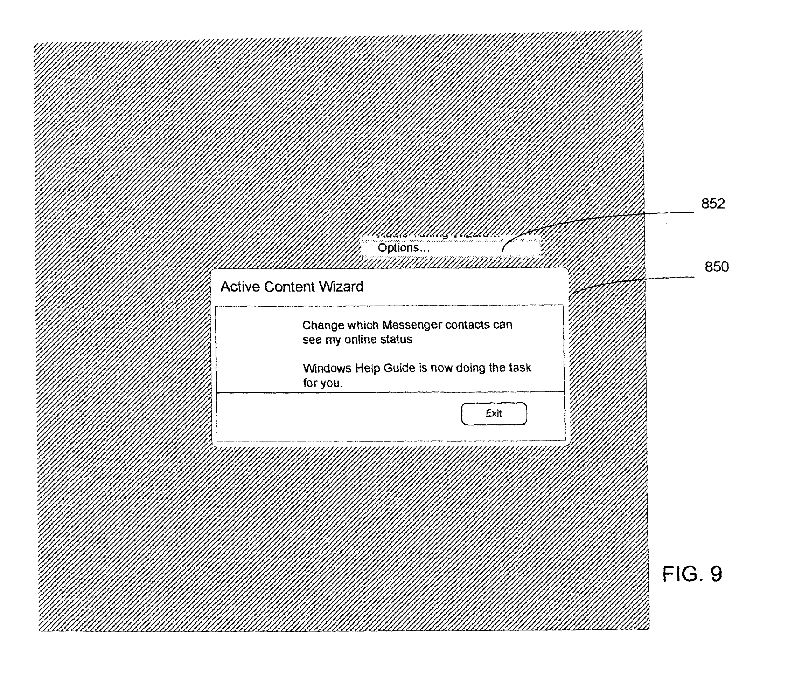

FIG. 9 is a diagrammatic view of a screen shot illustrating execution of an ACW script in "Do it for me" mode. The script illustrated in Fig. 9 allows a user to change which Messenger contacts can see the user's online status. ACW window 850 is positioned proximate user interface element 852. However, instead of waiting for the user to interact with element 852, the ACW interpreter, acting through the automation module, interacts with element 852. This autonomous action on behalf of the user is preferably reported to the user as indicated within window 850. Additionally, since the ACW interpreter will not need to wait for the user to take an action, no "Next Step" button is necessary.

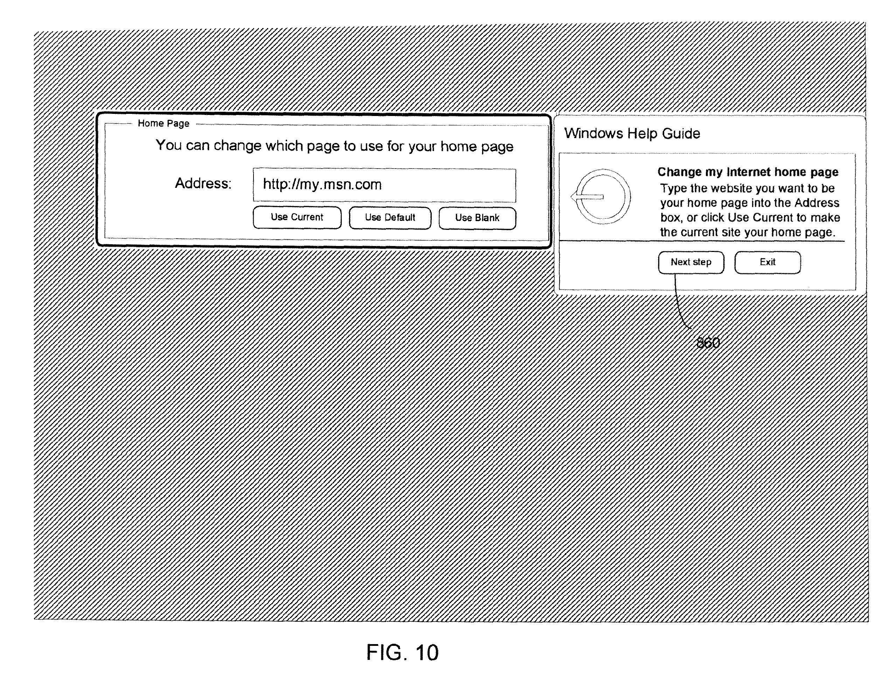

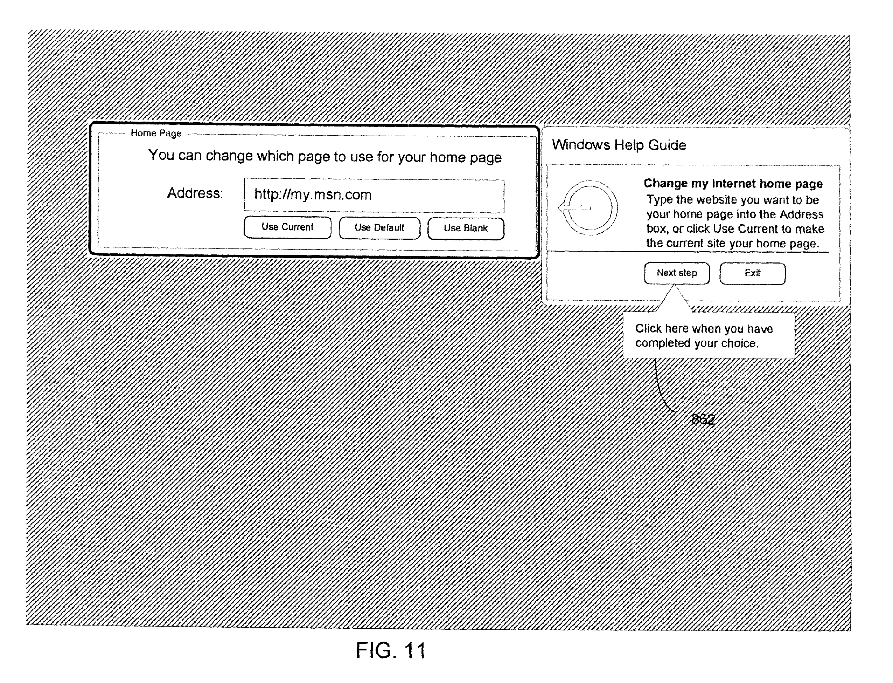

As ACW interpreter 230 executes a given ACW script, it preferably employs a timer for each step that requires a user action. The use of such a timer ensures that if a user is struggling, as indicated by the passing of a selected amount of time (for example, three seconds) ACW interpreter 230 will provide a further prompt to the user. For example, if ACW interpreter 230 is waiting for the user to press the "Next Step" button 860, in Fig. 10, and three seconds passes, ACW interpreter 230 will cause a further prompt, such as a pop-up or speech bubble 862 (shown in FIG. 11) to emanate from the "Next Step" button. The further prompt could simply request that the user, "Click here when you have completed your choice" or could provide additional instructions. As illustrated in FIG. 11, further prompt 862 is preferably not covered by fog 606. Preferably, the user timeout timer begins with the first mouse-click of the user, as observed by ACW interpreter 230 through automation module 340. Then, the user timeout timer is reset every time the user takes the correct action. Thus, a user who moves through the ACW with ease will never see the additional prompting.

Although the present invention has been described with reference to particular embodiments, workers skilled in the art will recognize that changes may be made in form and detail without departing from the spirit and scope of the invention.

## Claims

1. A method of executing a task on a computer system having a graphical user interface (GUI), comprising the steps of:
receiving a command from a user indicative of a task to be executed;
identifying a task, having a plurality of subtasks, in a task database that matches the command from the user;
executing each of the plurality of subtasks using a module of the computer system;
displaying each subtask of the task to the user on the GUI; and
increasing conspicuity of at least one user interface element relative to at least one of the plurality of subtasks.

2. The method of claim 1, wherein the module is an active content wizard (ACW) interpreter.

3. The method of claim 1, wherein increasing the conspicuity of the at least one user interface element includes highlighting the at least one user interface element.

4. The method of claim 1, wherein increasing the conspicuity of the at least one user interface element includes positioning an ACW window proximate the at least one user interface element.

5. The method of claim 1, wherein increasing the conspicuity of the at least one user interface element includes de-emphasizing areas around the at least one user interface element.

6. The method of claim 5, wherein de-emphasizing includes applying an alpha-blended color over the areas.

7. The method of claim 6, wherein the fog is an overlay, and includes a hole positioned such that the at least one user interface element is not obscured.

8. The method of claim 1, wherein increasing conspicuity includes creating a pulsing highlight around the user interface element.

9. The method of claim 1, wherein the subtask requires a user input, and further comprising initializing a timer and timing a period relative to the user's input.

10. The method of claim 9, and further comprising displaying a further prompt is the timer reaches a selected time.

11. The method of claim 10, wherein the selected time is about three seconds.

12. The method of claim 10, and further comprising resetting the timer once the user input is received.

13. The method of claim 1, wherein the subtask requires a user input, and further comprising providing a next step button in a window proximate the at least one user interface element.

14. A method of executing a task on a computer system having a graphical user interface (GUI), comprising the steps of:
receiving a command from a user indicative of a task to be executed;
identifying a task, having a plurality of subtasks, in a task database that matches the command from the user;
executing each of the plurality of subtasks using a module of the computer system using a selected level of user interaction; and
displaying each subtask of the task to the user on the GUI.

15. The method of claim 14, wherein the selected level of user interaction corresponds to a "show me" mode.

16. The method of claim 15, wherein conspicuity of each user interface element relative to each of the plurality of subtasks is increased.

17. The method of claim 14, wherein the selected level of user interaction corresponds to a "do it for me" mode.

18. The method of claim 14, wherein execution of at least one of the subtasks requires a user action, and wherein the method further includes highlighting a user interface element to receive user input.

19. The method of claim 14, wherein the selected level of user interaction is selected by the user.

20. The method of claim 14, and further comprising increasing conspicuity of at least one user interface element relative to at least one of the plurality of subtasks.

21. The method of claim 20, wherein increasing the conspicuity of at least one user interface element relative includes highlighting the at least one user interface element.

22. The method of claim 20, wherein increasing the conspicuity of at least one user interface element relative includes de-emphasizing areas surrounding the at least one user interface element.

23. The method of claim 22, wherein de-emphasizing includes alpha-blending to overlay a color over the areas.

24. The method of claim 23, wherein the alpha-blended overlay is semi-transparent.

25. The method of claim 20, wherein increasing conspicuity includes creating a pulsing highlight around the user interface element.
